# EUROPÄISCHE PATENTSCHRIFT

(11) **EP 2 782 699 B1**
(45) Veröffentlichungstag und Bekanntmachung des Hinweises auf die Patenterteilung: **05.07.2017**
(21) Anmeldenummer: 11790761.8
(22) Anmeldetag: 25.11.2011
(51) Int. Cl.: B23K 7/10, F23D 14/54, F23D 14/58

(54) **SCHNEIDBRENNER MIT EINEM DÜSENSYSTEM ZUM AUTOGENBRENNSCHNEIDEN MIT EINEM HÜLSENARTIGEN ROHRMANTELSTÜCK FÜR DAS ANSAUGEN VON AUSSENLUFT**
CUTTING TORCH WITH A NOZZLE SYSTEM FOR AUTOGENOUS TORCH-CUTTING WITH A SLEEVE-LIKE PIPE JACKET FOR DRAWING IN OUTSIDE AIR
CHALUMEAU AVEC UN SYSTÈME DE BUSE POUR L'OXYCOUPAGE AUTOGÈNE, POURVU D'UNE GAINE EXTÉRIEURE DE TYPE MANCHON SERVANT À ASPIRER L'AIR EXTÉRIEUR

(43) Veröffentlichungstag der Anmeldung: 01.10.2014
(73) Patentinhaber: Alpine Metal Tech Gega GmbH, 63783 Dillingen (DE)
(72) Erfinder: DEICA, Alexander, 65510 Hünstetten (DE); BUHR, Wigbert, 56593 Horhausen (DE)
(74) Vertreter: Aue, Hans-Peter
(86) Internationale Anmeldenummer: PCT/EP2011/071001
(87) Internationale Veröffentlichungsnummer: WO 2013/075750

(56) Entgegenhaltungen:
- DE-A1-102006 034 014
- DE-C- 591 749
- GB-A- 1 363 838
- JP-A- 2000 249 315
- US-A- 1 731 265

## Beschreibung

Die Erfindung bezieht sich auf einen Schneidbrenner mit einer Düse zum autogenen Brennschneiden von Metallwerkstücken sowie Werkstücken aus Eisenlegierungen, insbesondere von Brammen, Blöcken und Knüppeln, gemäß dem Oberbegriff des Anspruchs 1 (siehe DE 591 749 C). Sauerstoffgas-Schneidbrenner sind zum Schneiden von Metallwerkstücken und Werkstücken aus Eisenlegierungen vorgesehen. Damit werden beispielsweise Blöcke, Brammen und Knüppel effektiv geschnitten. Dabei wird die aus einem Strahl von Sauerstoff und Schneidgas entzündete Flamme des Schneidgasbrenners als Primärströmung auf die Oberfläche des zu schneidenden Metalls gelenkt. Das Metall wird dadurch auf dessen Zündtemperatur erhitzt, wobei ein Strahl von Schneidsauerstoff das erhitzte Metall oxidiert, um den Schnitt zu bewirken. Dabei fängt das Werkstück an zu brennen und bildet eine Fuge, die sich zu einem Schnitt verlängert, wenn der Strahl weiterläuft. Da dabei noch Wärme entsteht, wird dieses Schneidbrennen als autogen bezeichnet, wobei eine weitere Vorheizung der nächsten Metallschichten der zu schneidenden Stelle aus der Temperatur erfolgt, die aus dem verbrennenden Metall gewonnen wird.

Es ist allgemein bekannt, dass die für Autogenbrennschneiden eingesetzten Düsen erheblichen Freistrahllärm erzeugen, nämlich durch die Überschallentspannung der eingesetzten Medien Schneidsauerstoff, Heizsauerstoff bzw. Heizgas gegenüber der umgebenden Atmosphäre.

Eine erkennbare Minderung des Freistrahllärms ist nur über eine Verringerung der Strahlgeschwindigkeit bzw. eine Reduzierung des Betriebsdruckes erreichbar. Eine solche Lösung ist aber aus verfahrenstechnischen Gründen nicht akzeptabel, da dadurch die Brennschneidleistung erheblich verringert würde.

Aus der JP 2000 249315 A ist eine Brennschneiddüse bekannt, bei der ein Spalt vorgesehen, der das Gasgemisch nach außen, also zum Düsenaustritt zu leiten. Dabei ist nur ein Freiraum vorhanden, der die Düse mantelseitig umschließt. Vorgeheizter Sauerstoff und Schneidgas werden von einer zentralen Versorgungsstelle über Kanäle zur Düse zugeführt, wobei diese Kanäle strömungstechnisch mit dem Spalt verbunden sind.

Weiterhin offenbart die DE 591 749 C einen Schweiß-, Löt- und Anwärmbrenner, dem über ein Rohr zentral von einer Versorgungseinheit Sauerstoff unter Druck zugeführt wird, welcher aus der Düse des Brenners austritt. Zusätzlich wird durch einen hülsenartig den Düsenkörper umgebenden Injektor (Rohrstück) atmosphärische Luft angesaugt. Das aus atmosphärischer Luft und Sauerstoff bestehende Gemisch durchströmt einen Zwischenraum zwischen dem Brennerkopf und dem Mantel.

Die GB 1,363,838 offenbart ein Verfahren zum Herstellen eines vollständigen Düsenkopfes, der als Schneidbrenner geeignet ist.

Es ist Aufgabe der Erfindung, einen Schneidbrenner zum autogenen Brennschneiden der eingangs genannten Art zu schaffen, der wesentlich geringeren Lärm bei hoher Brennschneidleistung erzeugt. Ein Schneidbrenner gemäß der Erfindung ist im Anspruch 1 definiert. Durch die längsgerichteten Freiräume an der Innenseite des Rohrmantelstückes bilden sich Spalte zur Außenmantelfläche des Düsenkörpers. Die durch die Brennschneidmedien gebildete Schneidflamme erzeugt eine Sogwirkung, so dass Außen- bzw. Umgebungsluft über die längsgerichteten Freiräume, also die Spalte zwischen dem Rohrmantelstück und dem Düsenkörper, angesaugt wird und dadurch am vorderen Ausströmende eine Sekundärströmung erzeugt wird. Dies geschieht eben dadurch, dass die Primärströmung nach Verlassen der Düse auf Überschallgeschwindigkeit weiter beschleunigt wird und somit durch die Sogwirkung die zusätzliche Sekundärströmung aus der Außen- bzw. Umgebungsluft in Bewegung setzt.

Die Sekundärströmung dient dazu, die Primärströmung in seiner Ausdehnung zu dämpfen. Gleichzeitig wird auch die Schallexpansion in der Umgebungsatmosphäre minimiert und somit der Lärm beim Brennschneiden verringert, ohne die Brennschneidleistung negativ zu beeinflussen.

Weiterhin sorgt die Sekundärströmung für die erforderliche Kühlung des eingesetzten Rohrmantelstückes, das auch eine zusätzliche Schutzfunktion der Düse gegen Zuspritzung und Verschmutzung, insbesondere von Schlacke, Schweißperlen und Schmutzpartikeln, erfüllt.

Bei einer weiteren Ausgestaltung der Erfindung ragt das hülsenartige Rohrmantelstück über das vordere Ausströmende des Düsenkörpers hinaus. Dadurch wird die Bildung der Sekundärströmung optimiert und auf die erforderliche Strömungsgeschwindigkeit gebracht.

Nach einer weiteren Ausbildung der erfindungsgemäßen Lösung ist die Stirnseite am vorderen Ausströmende des Rohrmantelstückes geradlinig abgeschnitten.

Alternativ dazu ist die Stirnseite am vorderen Ausströmende des Rohrmantelstückes gezackt, gewellt oder kerbenartig abgeschnitten. Dadurch wird eine weitere Geräuschminderung erreicht. Darüber hinaus wird eine zusätzliche Luftströmung mit in die Primärströmung und die Sekundärströmung einbezogen.

Der der Erfindung zugrunde liegende Gedanke wird in der nachfolgenden Beschreibung anhand von Ausführungsbeispielen, die in den Zeichnungen dargestellt sind, näher beschrieben. Es zeigen:
- Fig. 1: einen erfindungsgemäßen Schneidbrenner zum autogenen Brennschneiden in einer ersten Ausführungsform,
- Fig. 2: ein Düsensystem für den erfindungsgemäßen Schneidbrenner zum autogenen Brennschneiden in einer zweiten Ausführungsform und
- Fig. 3: eine Schnittansicht eines Rohrmantelstückes, angebracht an einer Düse gemäß den Fig. 1 und 2.

Das Düsensystem 10 besteht im Wesentlichen aus einer Düse 1 mit einem Düsenkörper 2, der am vorderen Ende eines Schneidbrenners 3 zum autogenen Brennschneiden befestigt ist. Durch nicht näher dargestellte Medienkanäle für Schneidsauerstoff, Heizsauerstoff bzw. Heizgas in der Düse 1 und im Schneidbrenner 3 wird eine Schneidflamme zum Brennschneiden erzeugt. Dadurch bildet sich eine Primärströmung 4 am vorderen Ausströmende der Düse 1.

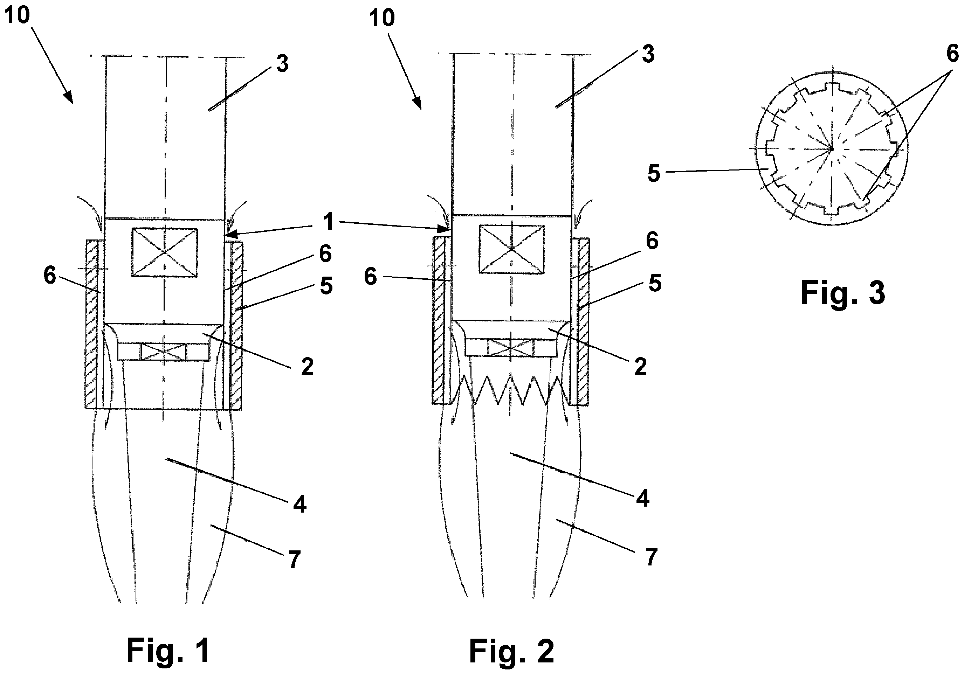

Gemäß den Fig. 1 und 2 ist der Düsenkörper 2 hülsenartig von einem Rohrmantelstück 5 umgeben, das über das vordere Ausströmende der Düse 1 hinausragt. Dieses besitzt an seiner Innenseite längsgerichtete Freiräume 6, wie dies auch aus Fig. 3 ersichtlich ist. Durch diese Freiräume 6 zwischen der Mantelfläche des Düsenkörpers 2 und dem Rohrmantelstück 5 wird durch die Saugwirkung der Brennschneidmedien Außen- bzw. Umgebungsluft angesaugt. Dadurch wiederum wird eine Sekundärströmung 7 um die Primärströmung 4 herum erzeugt.

Bei dem Düsensystem 10 gemäß Fig. 1 ist die Stirnseite am vorderen Ausströmende des Rohrmantelstückes 5 geradlinig abgeschnitten. Hingegen ist bei der Ausführungsform des Düsensystems 10 gemäß Fig. 2 die Stirnseite am vorderen Ausströmende des Rohrmantelstückes 5 gezackt ausgebildet.

### Liste der Bezugszeichen

- 10: Düsensystem
- 1: Düse
- 2: Düsenkörper
- 3: Schneidbrenner
- 4: Primärströmung
- 5: Rohrmantelstück
- 6: Freiräume
- 7: Sekundärströmung

## Patentansprüche

1. Schneidbrenner (3) mit einer Düse (1) zum autogenen Brennschneiden von Metallwerkstücken sowie Werkstücken aus Eisenlegierungen, insbesondere von Brammen, Blöcken und Knüppeln, aufweisend einen am vorderen Ende des Schneidbrenners (3) befestigten Düsenkörper (2) mit Medienkanälen für Schneidsauerstoff, Heizsauerstoff bzw. Heizgas zur Erzeugung einer Primärströmung (4), **dadurch gekennzeichnet, dass** der Düsenkörper (2) zusätzlich hülsenartig von einem Rohrmantelstück (5) zur Erzeugung einer zusätzlichen Sekundärströmung umgeben ist, wobei die Innenseite des Rohrmantelstückes (5) eine Mehrzahl von längsgerichteten spaltenbildenden Freiräumen (6) zur Mantelfläche des Düsenkörpers (2) für das Ansaugen von Außenluft durch die Saugwirkung der Brennschneidmedien zur Erzeugung einer Sekundärströmung (7) aufweist.

2. Schneidbrenner nach Anspruch 1, **dadurch gekennzeichnet, dass** das hülsenartige Rohrmantelstück (5) über das vordere Ausströmende des Düsenkörpers (2) hinausragt.

3. Schneidbrenner nach Anspruch 1, **dadurch gekennzeichnet, dass** die Stirnseite am vorderen Ausströmende des Rohrmantelstückes (5) geradlinig abgeschnitten ist.

4. Schneidbrenner nach Anspruch 1, **dadurch gekennzeichnet, dass** die Stirnseite am vorderen Ausströmende des Rohrmantelstückes (5) gezackt, gewellt oder kerbenartig abgeschnitten ist.

## Claims

1. A cutting torch (3) with a nozzle (1) for autogenous torch-cutting of metal workpieces as well as workpieces of iron alloys, in particular slabs, blocks and billets, having a nozzle body (2) fastened to the front end of the cutting torch (3), with media channels for cutting oxygen, heating oxygen or heating gas for generating a primary flow (4), **characterised in that** the nozzle body (2) additionally is surrounded with a sleeve-like pipe jacket (5) for generating an additional secondary flow, whereas the inner side of the pipe jacket (5) contains a plurality of free spaces (6) forming clearances in the longitudinal direction, towards the sheathing surface of the nozzle body (2) for sucking in the outside air through the suction effect of the torch-cutting media for generating a secondary flow (7).

2. The cutting torch according to claim 1, **characterised in that** the sleeve-like pipe jacket (5) hangs over the front outlet end of the nozzle body (2).

3. The cutting torch according to claim 1, **characterised in that** the front side is cut off in a straight line at the front outlet end of the pipe jacket (5).

4. The cutting torch according to claim 1, **characterised in that** the front side is cut off in a serrated, waved or notched manner at the front outlet end of the pipe jacket (5).

## Revendications

1. Chalumeau (3) avec une buse (1) pour oxycoupage autogène de pièces d'usinage en métal ainsi que des pièces d'usinage en alliages de fer, en particulier des brames, des blocs et des billettes, comportant un corps de buse (2) fixé à l'extrémité avant du chalumeau (3), avec des canaux de média pour l'oxygène de coupage, l'oxygène de chauffage ou le gaz de chauffage pour générer un écoulement primaire (4), **caractérisé en ce que** le corps de buse (2) est en outre entouré d'une gaine extérieure de type manchon (5) pour générer un écoulement secondaire additionnel, tandis que le côté interne de la gaine extérieure (5) contient une pluralité d'espaces libres (6) formant des dégagements dans la direction longitudinale, vers la surface de gainage du corps de buse (2) pour aspirer l'air extérieur par un effet d'aspiration des média d'oxycoupage pour générer un écoulement secondaire (7).

2. Chalumeau selon la revendication 1, **caractérisé en ce que** la gaine extérieure de type manchon (5) est suspendue au-dessus de l'extrémité de sortie avant du corps de buse (2).

3. Chalumeau selon la revendication 1, **caractérisé en ce que** la face avant est découpée en ligne droite à l'extrémité de sortie avant de la gaine extérieure (5).

4. Chalumeau selon la revendication 1, **caractérisé en ce que** la face avant est découpée en dents de scie, ondulée ou crantée à l'extrémité de sortie avant de la gaine extérieure (5).
